# EUROPÄISCHE PATENTSCHRIFT

(11) **EP 1 680 524 B1**
(45) Veröffentlichungstag und Bekanntmachung des Hinweises auf die Patenterteilung: **13.06.2007**
(21) Anmeldenummer: 04797510.7
(22) Anmeldetag: 02.11.2004
(51) Int. Cl.: C22C 38/04, C22C 38/60, C23C 4/06, C23C 4/08, C23C 4/12, F16H 1/00, F16H 55/06

(54) **AUF KRAFTÜBERTRAGUNG BEANSPRUCHTES GETRIEBETEIL**
DRIVING GEAR USED TO TRANSMIT POWER
ELEMENT D'ENGRENAGE NECESSITANT UNE TRANSMISSION DE FORCE

(30) Priorität: 03.11.2003 DE 10351258
(43) Veröffentlichungstag der Anmeldung: 19.07.2006
(73) Patentinhaber: Metabowerke GmbH & Co., 72622 Nürtingen (DE)
(72) Erfinder: KELLER, Michael, 72622 Nürtingen (DE); WOLKOBER, Lutz, 71116 Gärtringen (DE)
(74) Vertreter: Friz, Oliver
(86) Internationale Anmeldenummer: PCT/EP2004/012364
(87) Internationale Veröffentlichungsnummer: WO 2005/045086

(56) Entgegenhaltungen:
- PATENT ABSTRACTS OF JAPAN Bd. 1998, Nr. 04, 31. März 1998 (1998-03-31) & JP 09 324258 A (DAIDO STEEL CO LTD; HONDA MOTOR CO LTD), 16. Dezember 1997 (1997-12-16)
- PATENT ABSTRACTS OF JAPAN Bd. 1998, Nr. 03, 27. Februar 1998 (1998-02-27) & JP 09 287644 A (TOA STEEL CO LTD), 4. November 1997 (1997-11-04)
- PATENT ABSTRACTS OF JAPAN Bd. 2000, Nr. 12, 3. Januar 2001 (2001-01-03) & JP 2000 265242 A (DAIDO STEEL CO LTD), 26. September 2000 (2000-09-26)

## Beschreibung

Die Erfindung betrifft ein auf Kraftübertragung beanspruchtes Getriebeteil, insbesondere ein Zahnrad für Werkzeuggeräte, aus Stahl.

Getriebeteile, beispielsweise von Elektrowerkzeuggeräten, haben infolge der hohen Leistungsaufnahme eine begrenzte Lebensdauer. Zumeist ist die Ausfallursache ein Verschleiß der Zahnflanken bei der Ankerverzahnung. Zwar könnte mit härteren Zahnflanken der Verzahnungsverschleiß reduziert werden. Dies lässt sich mit konventionellen Härteverfahren für Stahl jedoch nicht wirtschaftlich erreichen.
Da die Beanspruchung einer Verzahnung im Prinzip auf die Oberfläche der Zahnflanken begrenzt bleibt, besteht die Möglichkeit, die Zahnflanken mit einer harten verschleißbeständigen Schicht zu versehen. Solche Schichten werden im Plasmaverfahren abgeschieden und sind um ein Vielfaches härter als konventionell gehärteter Stahl.

Es ist bereits bekannt Zahnräder aus zuvor gehärtetem Stahl, zusätzlich mit einer solchen harten Beschichtung und/oder mit einer tribologisch wirksamen reibarmen Funktionsschicht zu versehen. Da solche Beschichtungen sehr dünn sind, war man seither davon ausgegangen, dass hierfür nur zuvor gehärteter Stahl als Grundlage für die Beschichtung verwendet werden kann. Bei dieser Härtung des Stahls wird ein ferritisches oder perlitisches Gefüge durch eine aufwendige Wärmebehandlung in ein martensitisches Gefüge umgewandelt; es kommt also zu einer Gefügeumbildung.

Gemäß JP-A-09324258 wird bei einem Stahlteil mit ferritischperlitischem Gefüge, mit 0,15 -0,4 Gew.-% Kohlenstoff, ≤ 0,50 Gew.-% Silizium, 0,20 - 1,50 Gew,-% Mangan und 0,05 - 0,50 Gew.-% Chrom und gegebenenfalls weiteren Bestandteilen, insbesondere bis zu 0,03 Gew.-% Schwefel, eine Gasnitrierbehandlung ausgeführt, um eine Oberflächenhärtung von wenigstens 0,3 mm Tiefe zu erreichen.

Der vorliegenden Erfindung liegt die Aufgabe zugrunde, ein auf Kraftübertragung beanspruchtes Getriebeteil der eingangs genannten Art dahingehend zu verbessern, dass es auf wirtschaftliche Weise herstellbar ist und dennoch eine den Anforderungen genügende Verschleißbeständigkeit aufweist.

Diese Aufgabe wird erfindungsgemäß gelöst durch ein auf Kraftübertragung beanspruchtes Getriebeteil, insbesondere Zahnrad, für Werkzeuggeräte, aus einem nicht wärmegehärteten Stahl mit ferritischem oder perlitischem Gefüge und einer Grundhärte der unbeschichteten Stahloberfläche von wenigstens 25 HRC, und mit einer harten Oberflächenbeschichtung von weniger als 10 µm Dicke.

Mit der Erfindung wird also vorgeschlagen, zur Herstellung von Getriebeteilen nicht auf einen gehärteten, insbesondere einsatzgehärteten Stahl, zurückzugreifen, der dann gegebenenfalls mit einer weiteren harten, im Plasmaverfahren abgeschiedenen verschleißbeständigen Schicht versehen wird, sondern bewusst einen nicht wärmegehärteten Stahl, jedoch mit einer hohen Grundfestigkeit zu verwenden.

Es wurde nun erfindungsgemäß festgestellt, dass durch eine harte Oberflächenbeschichtung an sich bekannter Art auch Getriebeteile aus ungehärtetem Stahl der beanspruchten Art im Hinblick auf ihre Härte und Verschleißbeständigkeit derart verbessert werden können, dass sie den üblichen Anforderungen an die Lebensdauer gerecht werden. Trotz der Verwendung von ungehärtetem Stahl jedoch der beanspruchten Grundhärte kommt es nicht zu dem sogenannten "Eierschaleneffekt", d. h. zu einem Durchdrücken der Oberflächenbeschichtung bei einer Punktbelastung.

Während man seither davon ausging, dass sich ungehärteter Stahl nicht für die Herstellung von auf Kraftübertragung beanspruchten Getriebeteilen eignet, wurde mit der vorliegenden Erfindung festgestellt, dass dies für Stahl mit einer ausreichenden Grundhärte nicht gilt.

Durch im Plasma abgeschiedene Schichten kann die Zahnflankenhärte und Verschleißbeständigkeit und damit die Lebensdauer von aus ungehärtetem Stahl der beanspruchten Art hergestellten Getriebeteilen deutlich gesteigert werden. Da die natürliche Grundfestigkeit des ungehärteten Stahls der beanspruchten Art ausreicht, den Eierschaleneffekt zu vermeiden, kann auf ein Härten des Stahls verzichtet werden. Hieraus resultiert eine Verringerung der Herstellkosten bei gleichzeitiger Steigerung der Bauteilqualität. Infolge des fehlenden Härteverzugs sind Form-, Lage- und Maßtoleranzen geringer.

Es ist beispielsweise denkbar die erforderliche Grundfestigkeit von wenigstens 25 HRC (gemessen bei 1470 N Prüflast), insbesondere von 25 - 35 HRC, insbesondere von 26 - 35 HRC, insbesondere von 27 - 35 HRC, insbesondere von 27 - 30 HRC durch eine Streckung oder ein Ziehen des Stahls zu erreichen, also nicht durch eine Wärmehärtung, sondern unter Beibehaltung eines ferritischen oder perlitischen Gefüges.

Beispielsweise erweist sich ein Stahl mit 0,4 - 0,5 Masse-% Kohlenstoff, 1,13 - 1,70 Masse-% Mangan, 0,2 - 0,35 Masse-% Schwefel, gegebenenfalls mit Silizium und Phosphor, als vorteilhaft. Die hohe Grundfestigkeit solcher Stähle basiert auf eingelagerten Mangansulfiden, die jedoch an der Oberfläche liegend Kerbwirkungen mit sich bringen und dadurch auch bei anschließender (Wärme)Härtung zu einer den Anforderungen an sich nicht genügenden Belastbarkeit führen. Deshalb wurde ungehärteter Stahl bislang nicht zur Herstellung stark belasteter Getriebeteile verwendet. Es wurde nun festgestellt, dass die harte Oberflächenbeschichtung die aufgrund ihrer Kerbwirkung schädlichen Mangansulfide in der Oberfläche abdeckt und sie hierdurch unschädlich macht. Trotz der Verwendung von an sich ungehärtetem Stahl der genannten Art tritt der "Eierschaleneffekt" nicht auf. Denn die Mangansulfide führen zu einer dennoch hohen und ausreichenden Grundfestigkeit des ungehärteten Stahls der beanspruchten Zusammensetzung.

Die Beschichtung kann zusätzlich reibarm gestaltet werden, so dass an dem Getriebeteil, insbesondere an dessen Zahnflanken, weniger Reibwärme entsteht.

Als Oberflächenbeschichtung kommt in vorteilhafter Weise eine WCH-Beschichtung (Wolfram-Kohlenstoff-Wasserstoff) oder eine DLC- (Diamond Like Carbon) oder eine W-DLC- (Wolfram-Diamond Like Carbon) oder eine CrN (Chrom Nitrit) - Beschichtung oder Kombinationen dieser Beschichtungen in Frage.

Es hat sich als hinreichend erwiesen, wenn die Oberflächenbeschichtung eine Dicke von 2 bis 8, insbesondere von 3 bis 7 und vorzugsweise von 4 bis 6 µm aufweist.

Die vorausgehend angeführten Werte der Rockwellhärte erreichen zwar nicht denjenigen Wert von 50 bis 65 HRC von beispielsweise einsatzgehärteten 16MnCrS5Pb oder 16MnCr5 Stählen; er kommt diesen Härtewerten aber zumindest so nahe, dass ein zufriedenstellender Betrieb möglich ist. Die erwähnten Werte der Rockwellhärte sind indessen höher als bei ungehärtetem M16MnCrS5-Stahl.

Die Oberfläche des erfindungsgemäßen beschichteten Getriebeteils vermag des Weiteren eine Mikrohärte HV 0,03 von wenigstens HV 1200, insbesondere von wenigstens HV 1250, aufzuweisen. Die Mikrohärte wird mit einer so geringen Prüflast gemessen, dass sie wirklich die Härte der Oberflächenbeschichtung wiedergibt, also der Prüfkörper die Oberflächenbeschichtung nicht durchdringt.

Des Weiteren erweist sich eine kombinierte Beschichtung mit CrN/DLC bzw. CrN/W-DLC als besonders vorteilhaft. Nicht nur die Mikrohärte, sondern auch die Verschleißbeständigkeit und der Reibwert ist gegenüber unbeschichteten, jedoch aus gehärteten, insbesondere einsatzgehärteten Stählen, hergestellten Getriebeteilen verbessert.

## Patentansprüche

1. Auf Kraftübertragung beanspruchtes Getriebeteil, insbesondere Zahnrad, für Werkzeuggeräte, aus einem nicht wärmegehärteten Stahl mit eingelagerten Mangansulfiden, mit 0,4 - 0,5 Masse-% Kohlenstoff, 1,13 - 1,70 Masse-% Mangan, 0,2 - 0,35 Masse-% Schwefel, gegebenenfalls Silizium und Phosphor, mit ferritischem oder perlitischem Gefüge und einer Grundhärte der unbeschichteten Oberfläche von wenigstens 25 HRC, und mit einer harten Oberflächenbeschichtung von weniger als 10 µm Dicke.

2. Getriebeteil nach Anspruch 1, **dadurch gekennzeichnet, dass** die Oberflächenbeschichtung WCH oder DLC oder W-DLC oder CrN oder Kombinationen hiervon ist.

3. Getriebeteil nach Anspruch 1 oder 2, **dadurch gekennzeichnet, dass** die Oberflächenbeschichtung eine Dicke von 2 - 10 µm, insbesondere von 3 - 7 µm aufweist.

4. Getriebeteil nach einem der vorstehenden Ansprüche, **dadurch gekennzeichnet, dass** seine unbeschichtete Oberfläche eine Rockwellhärte von 25 - 35 HRC, aufweist.

5. Getriebeteil nach einem der vorstehenden Ansprüche, **dadurch gekennzeichnet, dass** seine unbeschichtete Oberfläche eine Rockwellhärte von 26 - 35 HRC aufweist.

6. Getriebeteil nach einem der vorstehenden Ansprüche, **dadurch gekennzeichnet, dass** seine unbeschichtete Oberfläche eine Rockwellhärte von 27 - 30 HRC aufweist

7. Getriebeteil nach einem der vorstehenden Ansprüche, **dadurch gekennzeichnet, dass** seine beschichtete Oberfläche eine Mikrohärte HV 0,03 von wenigstens HV 1200 aufweist.

8. Getriebeteil nach einem der vorstehenden Ansprüche, **dadurch gekennzeichnet, dass** seine beschichtete Oberfläche eine Mikrohärte HV 0,03 von wenigstens Hv 1250 aufweist.

## Claims

1. Driving gear used to transmit power, in particular a gear-wheel, for tools, consisting of a non-tbermally hardened steel with embedded manganese sulphides, with 0.4 to 0.5 % by mass of carbon, 1.13 to 1.70 % by mass of manganese, 0.2 to 0.35 % by mass of sulphur, optionally silicon and phosphorus, having a ferritic or pearlitic structure and a basic hardness of the uncoated surface of at least 25 HRC, and with a hard surface coating less than 10 µm thick.

2. Driving gear according to claim 1, **characterised in that** the surface coating is WCH or DLC or W-DLC or CrN or combinations thereof.

3. Driving gear according to either claim 1 or claim 2, **characterised in that** the surface coating has a thickness of from 2 to 10 µm, in particular from 3 to 7 µm.

4. Driving gear according to any one of the preceding claims, **characterised in that** the uncoated surface of said driving gear has a Rockwell hardness of from 25 to 35 HRC.

5. Driving gear according to any one of the preceding claims, **characterised in that** the uncoated surface of said driving gear has a Rockwell hardness of from 26 to 35 HRC.

6. Driving gear according to any one of the preceding claims, **characterised in that** the uncoated surface of said driving gear has a Rockwell hardness of from 27 to 30 HRC.

7. Driving gear according to any one of the preceding claims, **characterised in that** the coated surface of said driving gear has a microhardness HV 0.03 of at least HV 1,200.

8. Driving gear according to any one of the preceding claims, **characterised in that** the coated surface of said driving gear has a microhardness HV 0.03 of at least HV 1,250.

## Revendications

1. Élément de mécanisme sollicité pour transmettre une force, en particulier une roue dentée, pour des appareils d'outillage, constitué d'un acier non durci à chaud avec des inclusions de sulfures de manganèse, avec 0,4 à 0,5% en masse de carbone, 1,13 à 1,70% en masse de manganèse, 0,2 à 0,35% en masse de soufre, le cas échéant avec du silicium et du phosphore, ayant une structure ferritique ou perlitique et une dureté de base de la surface non revêtue au moins égale à 25 HRC et ayant un revêtement de surface dur ayant une épaisseur inférieure à 10 µm.

2. Élément de mécanisme selon la revendication 1, **caractérisé en ce que** le revêtement de surface est en WCH ou en DLC ou en W-DLC ou en CrN, ou des combinaisons des précédents.

3. Élément de mécanisme selon la revendication 1 ou la revendication 2, **caractérisé en ce que** le revêtement de surface a une épaisseur de 2 à 10 µm, en particulier de 3 à 7 µm.

4. Élément de mécanisme selon l'une des revendications précédentes, **caractérisé en ce que** sa surface non revêtue présente une dureté Rockwell de 25 à 35 HRC.

5. Élément de mécanisme selon l'une des revendications précédentes, **caractérisé en ce que** sa surface non revêtue présente une dureté Rockwell de 26 à 35 HRC.

6. Élément de mécanisme selon l'une des revendications précédentes, **caractérisé en ce que** sa surface non revêtue présente une dureté Rockwell de 27 à 30 HRC.

7. Élément de mécanisme selon l'une des revendications précédentes, **caractérisé en ce que** sa surface revêtue présente une microdureté HV 0,03 au moins égale à HV 1200.

8. Élément de mécanisme selon l'une des revendications précédentes, **caractérisé en ce que** sa surface revêtue présente une microdureté HV 0,03 au moins égale à HV 1250.
